# EUROPEAN PATENT SPECIFICATION

(11) **EP 4 221 169 B1**
(45) Date of publication and mention of the grant of the patent: **04.03.2026**
(21) Application number: 22154300.2
(22) Date of filing: 31.01.2022
(51) Int. Cl.: H04M 3/22, H04M 3/56

(54) **SYSTEM AND METHOD FOR MONITORING COMMUNICATION QUALITY**
SYSTEME UND VERFAHREN ZUR ÜBERWACHUNG DER KOMMUNIKATIONSQUALITÄT
SYSTÈME ET PROCÉDÉ DE SURVEILLANCE DE LA QUALITÉ DE COMMUNICATION

(43) Date of publication of application: 02.08.2023
(73) Proprietor: Koa Health Digital Solutions S.L.U., 08018 Barcelona (ES)
(72) Inventor: Garcia i Tormo, Albert, 08018 Barcelona (ES); González, Miguel, 08018 Barcelona (ES); Acedo, Javier, 08018 Barcelona (ES); Lantz, Johan, 08018 Barcelona (ES)
(74) Representative: Lorenz Seidler Gossel Part. mbB

(56) References cited:
- US-A1- 2009 319 268
- US-A1- 2014 278 423

## Description

The present invention relates to a system and method for monitoring communication quality, for example in the context of videoconferences or telephone conferences.

In recent years, remote communication technologies increasingly gained popularity, a process especially fueled by the recent COVID-19 pandemic and the associated restrictions, such as a requirement to work remotely.

However, a wide use of such remote communication technologies as videoconferences in the professional environment has so far been hampered for example by connectivity problems and losses of transmitted information leading to overall suboptimal call quality and leaving participants of e.g. video conferences unable to determine whether other participants can actually understand them to a satisfactory degree. For instance, consider the sentence "you should not do this", if the word "not" is omitted during the transmission of this message to another participant, this still yields a grammatically correct sentence ("you should do this") but with opposite meaning. Such situations can well happen during videoconferences and currently there are no means for the speaker to be aware of such a change in the transmitted message, unless another participant explicitly asks.

Prior art in the field is US2009319268A and US2014278423A.

The object of the present invention is to alleviate or even abolish the problems of the prior art. In particular, it is an object of the present invention to provide an improved system and method for monitoring the quality of communication, for example in the context of video or telephone conferences.

This object is solved by the subject-matter of the independent claims. Further embodiments of the invention are the subject-matter of the dependent claims.

A method is disclosed for monitoring the quality of communication between at least two devices, the method comprising:
receiving, by means of a first device, input from a user; converting the input received from the user into a first sequence of information;
transmitting the first sequence of information to a second device,
generating a second sequence of information based on the received input by extracting from the received input at least one piece of information corresponding to a past time instant, wherein the at least one piece of information is preferably time-stamped; storing the second sequence of information in the first device; generating a third sequence of information by means of the second device, wherein the third sequence of information corresponds to an output to be output by the second device on the basis of the first sequence of information;
generating a fourth sequence of information based on the third sequence of information by extracting from the third sequence of information at least one piece of information corresponding to a past time instant, wherein the at least one piece of information is preferably time-stamped;
transmitting the fourth sequence of information to the first device;
comparing the second and fourth sequences of information to detect any aberrances there between, wherein each piece of information of the second sequence of information is compared to a corresponding piece of information of the fourth sequence of information, and
indicating, preferably displaying, by means of the first device for each piece of information of the first sequence of information an indication of the level of human intelligibility of an output performed by the second device based on this piece of information and / or preferably an indication of the output performed by the second device based on this piece of information.

The level of human intelligibility of an output performed by the second device may be indicated for example, by colour-coded symbols, e.g. a bar moving with the progression of time that appears in red if human intelligibility at a given time instant is poor (e.g. due to a loss of words or audio signals being distorted etc.) and in green if human intelligibility at a given time instant is good, e.g. no losses of information have been detected.

Preferably, a method according to the present invention focuses on the level of human intelligibility of a transmitted information ("how well could a listening participant understand the content of the speech of a speaking participant during a videoconference") in contrast to focusing on the transmission fidelity at the level of bytes, data packages, or individual frames of a video ("how accurately was the speech transmitted"). For example, the loss of a single frame of a video stream or the loss of some audio data during compression or decompression may not impact the human intelligibility of the audio signal or message conveyed, e.g. another listening participant may still understand the speech of a talking participant of a videoconference. Such a loss of a single frame of a video stream or the loss of some audio data during compression or decompression may even be below the threshold of human perception and thus may not even be noticed by a listening participant of the videoconference.

According to an embodiment, the method further comprises the step: evaluating whether any detected aberrance between the second and fourth sequences of information is above or below a threshold of human perception and / or is relevant to human understanding.

For example, it may be the case that only a single package of audio or video data was lost during transmission from the first device to the second device but this data loss is negligible to a user of the second device, because human beings do not understand audio or video output on a data-package or frame basis. For example, a user might not be able to notice that a single frame of a video was lost or that audio data relating to background noise was lost, because the listening still understands what the speaking user has said and also still understands the video transmitted. Thus, there may be data losses during transmission that one of the users of the devices or even both users can not perceive and that are thus not relevant to human understanding of transmitted content. Preferably, the present invention is thus not focused on detecting any, including even minute, aberrances between a message or sequence of information sent from the first device to a message or sequence of information received by the first device, but is focused on detecting and preferably reporting aberrances that are relevant to human understanding of the message.

Current videoconference solutions do include flow control mechanisms, which allow them to cope with issues like variable communication delays or lost packets / packages of data. In these cases the goal is optimising the call quality given the available communications channel. Nevertheless, all these flow control mechanisms do not go higher than the transport layer; this means that they focus on small pieces of information (packets or packages) but not with the whole human-understandable message. Based on this mechanism it is feasible to analyse the link quality, for example by counting the amount of packets with errors, but it is not possible to analyse the human-intelligibility of the received message. Furthermore, it is not possible identify whether packets are lost, as protocols such as User datagram Protocol (UDP) do not provide mechanisms for that. In contrast to existing solutions, the present invention preferably introduces new quality- analyses mechanisms at high level, to explicitly provide information to the user about the human-intelligibility of the received message.

Preferably, according to the invention, aberrances that are expected above a threshold of human perception and / or are relevant to human understanding are identified and reported according to the present invention. For example, the message sent from the first device to the second device might by "I eat bread with oil" and the feedback message being sent back from the second device to the first device might be "I eat bread width oil". Thus, there appears to be an aberrance in the speech signal recorded at the first device ("with") from the speech signal reproduced at the second device ("width") that is relevant for human understanding of the message (in contrast to e.g. a packet of background noise being lost). In this case, according to the invention, the aberrance may be indicated or reported to the user, preferably the user of the first device, however, judging how severe the aberrance is and whether the aberrance requires action from one of the user or, for example by repeating the sentence, is left to the user. In the example of the first user of the first device saying "I eat bread with oil" and the message being reproduced by the second device of the second user being "I eat bread width oil", the user of the first device may judge that this aberrance was not too severe for the other user to understand the message and thus no repetition of the sentence is required.

In other words, this may offer the advantage that if aberrances between speech signals captured by the first device and audio signals reproduced by the second device are detected, these are only indicated to the user of they are relevant to human understanding of the speech signals. For example, during a video conference, background noise accompanying captured speech signals may not be accurately transmitted. This omission, however does not compromise the human understanding of another participant of the video conference of the speech signals, so this aberrance from absolute transmission fidelity may be regarded as irrelevant to assessing call quality. Similarly, there may be data losses during transmission that are not perceptible to a human participant in a video conference. Such aberrances from absolute transmission fidelity may also be regarded as irrelevant to assessing call quality.

Preferably, the at least one piece of information is extracted from the received input such that the at least one piece of information corresponds to an entity, such as a word, a number, a pause, a frame, an image, or a sound, comprised in the input that is relevant for human intelligibility of the input.

For example, an entity such as a word or a pause that is relevant for human understanding of speech may be extracted from a continuous stream of audio data stemming from speech captured by the first device.

According to an embodiment of the invention, the input received from the user is acoustic / audio input, preferably input relating to speech, and the input is converted into the first sequence of information by compressing and / or encoding. For example, the acoustic / audio input is first digitised by a microphone and the digitised audio data is then compressed and / or encoded. Conversely, on the receiving side, the received compressed and / or encoded audio data is preferably digitised audio data that is converted into an analogue signal output by a speaker.

Preferably, the second and fourth sequences of information are generated by a speech-to-text converter and comprise text. The second and fourth sequences of information may be regarded as summary messages of the human intelligible content of acoustic or audio signals captured by the first device and reproduced by the second device. The second and fourth sequences of information may each take the form of a file or a continuous stream and may be in text-format. Similarly, the sixth and eighth sequences of information may each take the form of a file or a continuous stream and may be in text-format.

According to an embodiment of the invention, a separate communication channel and preferably a communication protocol configured to preserve information integrity to a high degree is used to transmit the fourth sequence of information between the first and second devices. In other words, the summary message of the human intelligible content of acoustic or audio signals captured by the first device may be transmitted in a separate channel from the channel used for transmitting the actual preferably encoded and compressed acoustic or audio signals from the first device to the second device. For example, the separate communication channel for transmitting the fourth and / or sixth sequences of information may use a transmission control protocol (TCP) communication protocol. The first and fifth sequences of information may be sent via a communication channel using a user datagram (UDP) communication protocol.

According to an embodiment, the output performed or reproduced by the second device based on the third sequence of information is indicated to a user of the first device, preferably by displaying subtitles corresponding to acoustic signals, preferably relating to speech, output by the second device, on an output unit, preferably a screen, of the first device.

For example, the user of the first device may receive feedback in the form of subtitles of the content reproduced to the user of the second device ("what is received" or "what the user hears") based on the speech signals captured by the first device ("what is sent" or "what the user actually said"). Additionally or alternatively, the user of the first device may also receive feedback in the form of subtitles of the content sent to the user of the second device based on the speech signals captured by the first device ("what the first device captures from the actual speech of the user").

The indication of the level of human intelligibility of an output performed by the second device based on this piece of information of the first sequence of information can relate to a symbol, a font or a color code. For example, words that were omitted may be displayed in red, italics or strike-though or be indicated in brackets or with an asterisk. Words that were transmitted with a satisfactory degree of human intelligibility may be indicated in green or in a specific font etc. Words that were added may be displayed e.g. in blue, underlined or shown in square brackets etc. Of course, not only the addition or omission of words can impact human intelligibility of the output, but also the speed at that e.g. a word is reproduced or the delay with that e.g. a word is reproduced. Thus, the addition and omission or words, the scrambling of words, distortions in sounds, the reproduction speed of words etc. are all merely examples of factors that impact human intelligibility of the output performed by the second device. The present invention is thus in no way limited to these examples, but is applicable to any factor likely to impact human intelligibility of the output performed by the second device.

In an embodiment, the indication of the level of human intelligibility of an output performed by the second device based on this piece of information of the first sequence is directed to a different sensory modality of the user than the input received from the user. For example, if acoustic / audio data, such as speech signals, are captured from the user of the first device, the indication of the level of human intelligibility may be visual, e.g. by displaying subtitles.

According to another embodiment, the second sequence of information may be generated directly out of the audio data acquired by the microphone without an intermediate step of processing the audio data, for example by compressing and / or encoding. Of course, the second sequence of information may also be generated out of the audio data acquired by the microphone after the audio data have been processed, e.g. by encoding and compressing.

According to another embodiment, the first device captures speech and provides digital audio. This digital audio is compressed and encoded and sent to the second device. The very same compressed and encoded digital audio signal is also uncompressed and decoded at the source side, thus generating a new digital audio signal. This new digital audio signal is then converted to text and stored (thus forming he second sequence of information) and compared later on (e.g. with the fourth sequence of information).

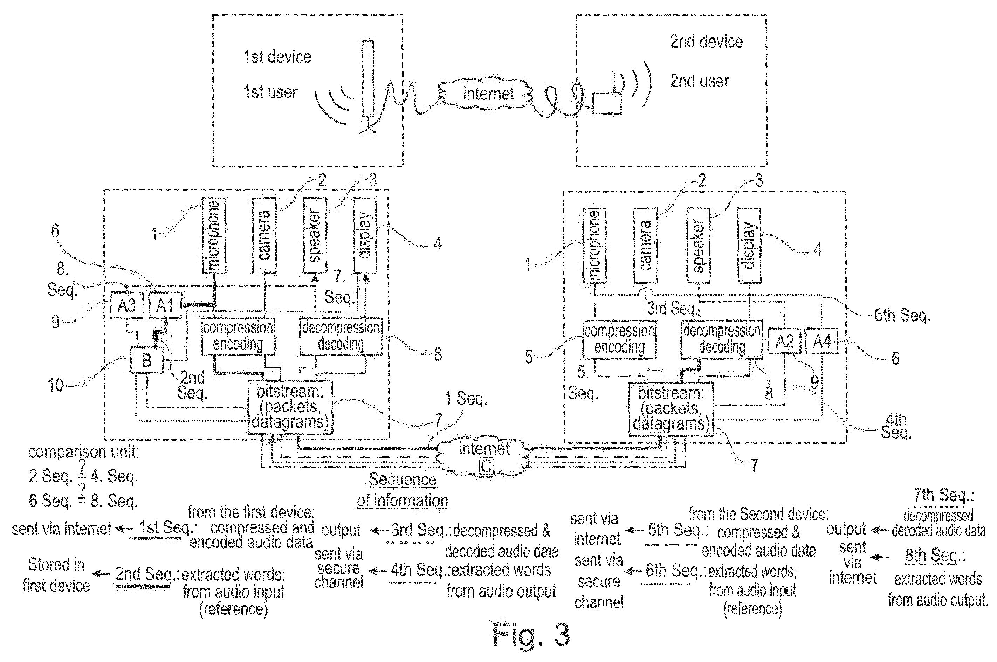

Although so far mainly the transmission of audio data has been discussed to illustrate the invention, the invention is not limited to audio data and is equally applicable to other data such as video data. Of course, it should be apparent for the person skilled in the art that if in an example, audio data has been described that is captured by a microphone and reproduced by a speaker, if the invention is to be applied to video data, these video data are captured by a camera and reproduced by a display. Thus, in the example in Fig. 3 the first and second devices both comprise a microphone and a camera and a speaker and a display and thus can be used for applying the invention to both audio and video data although the example of audio data is described in more detail.

For example, according to an embodiment, an identifier is added to each piece of information of the first sequence of information (that in this example corresponds to a stream of frames of a video acquired by a camera e.g. of the first device). For example, consecutive numbers may be added to consecutive frames of the video. A second sequence of information is generated from the first sequence of information, wherein each of the pieces of information of the second sequence of information is linked to an identifier. For example, a pattern A extracted from the first frame is linked to the number 1 and a pattern B extracted from the second frame is linked to the number 2 of the second frame. At the level of the second device, a video is displayed based on the first sequence of information. From the displayed video, a fourth sequence of information is generated, wherein each of the pieces of information of the fourth sequence of information is also linked to an identifier. For example, a pattern A extracted from the first frame is linked to the number 1 and a pattern C extracted from second frame is linked to the number 2. If the sequences are compared on a frame-by frame basis, it is appears in this example that the first frame was transmitted correctly, because the first frame captured by the first device contained pattern A and the first frame displayed by the second device also contained pattern A. Pattern A can be e.g. a face. The second frame captured by the first device contained pattern B (e.g. a close-up of the face) and the second frame displayed by the second device contained pattern C (e.g. a hand).Thus, it appears that there is an aberrance between the video recorded at the first device and the video displayed / reproduced by the second device. In other words, at the first device a pattern detector is run on each frame and a list of extracted patterns is obtained. The same operation is performed by the second device for each of the received frames and then the patterns extracted in both sides must coincide, if the transmission was without any data loss.

According to another embodiment, an identifier is added to each piece of information of the second sequence of information (e.g. a number is added to each frame extracted from a video stream). Thus, the second sequence of information may be regarded as a reference message of the video captured at the first device and may for example contain the sequence: frame 1-frame 2-frame 3-frame 4 indicating that four frames with identifiers in the form of consecutive numbers were contained in the video message sent from the first device to the second device. Preferably at the second device, the corresponding identifier is extracted from each piece of information of the fourth sequence of information. Thus, the fourth sequence of information may be regarded as a summary message of the video received by the second device and may contain may for example contain the sequence: frame 1-frame 2- frame 4 indicating that only three frames (frames 1,2 and 4) were contained in the video message reproduced by the second device. In other words, the identifiers of the pieces of the second and fourth sequences of information are compared to detect any aberrances of the first and second sequences of information corresponding in this example to the content contained in the video captured at the first device and the video reproduced at the second device. In other words, the camera of the first device may be regarded as providing the first sequence of information (in this case, a sequence of frames). An identifier is added to each of the frames (e.g. a frame number) and the sequence of frames with each frame bearing an identifier is sent to the second device. Thus, in this example, the sequence of frames with the identifiers can be regarded as the second sequence,

According to another embodiment, the first device may send a stream of video frames to the second device wherein each frame contains an identifier and the identifier is e.g. a stream of consecutive numbers. The second device may be configured to perform a plausibility check on the incoming video stream, for example, by evaluating whether the number of the identifier of each consecutive frame increases by 1. If the plausibility check indicates an error in the transmission, for example if a frame with the identifier 4 follows on the frame with the identifier 2, this aberrance could be indicated to the user of the first and / or second device.

If for example, via a conference, video is also transmitted, it is possible that packets of video data or even whole frames may be lost. This can cause interruptions in the video stream and mismatches or synchronisation issues between the audio and video channels. Adding an identifier to the each piece of information, e.g. each frame of a video allows the detection of such losses.

For example, according to an embodiment of the invention a specific pattern may be added as an identifier to each of the frames or images; for example a small number at a corner of the image, or at the area overlapped by the self-video, or the frame may be extended and the identifier may be added outside the part of the frame that is shown to the user. This identifier can change from frame to frame or image to image, for example like a loop counter of three digits. At the receiver side, the reconstructed image can be analysed and the value of this number can be extracted, verifying that the counter is following the expected pattern (for instance, increase by 1 at each frame or image) can ensure that no frames are lost. The information regarding lost frames or received frames on the side of the second device can be sent, preferably timestamped, to the first device and any aberrances or losses of frames relevant to human understanding or above a threshold of human perception may be indicated. For example, to display a set of multiple consecutive lost frames, a marker such as an asterisk can be added next to the any subtitles indicating concurrent audio signals to indicate the video disruption. For easy evaluation, the marker may be colour-coded according to the number of frames lost (severity of the disruption).

Another aspect of the present invention relates to a device, preferably configured to perform a method according to one of the preceding claims, wherein the device comprises:
at least one input unit, such as a microphone;
at least one output unit, such as a speaker;
at least one conversion unit, configured to convert input received from a user via the input unit into a first sequence of information,
at least one extraction unit, configured to generate a second sequence of information from the received input by extracting from the received input at least one piece of information corresponding to a past time instant, wherein the at least one piece of information is preferably time-stamped;
a memory for storing the second sequence of information;
at least one communication unit, configured to transmit the first sequence of information to a second device and receive from the second device a fourth sequence of information, wherein the fourth sequence of information corresponds to at least one piece of information corresponding to a past time instant, wherein the at least one piece of information is preferably time-stamped, extracted from a third sequence of information corresponding to an output to be output by the second device on the basis of the first sequence of information;
at least one comparison unit, configured to compare the second and fourth sequences of information to detect any aberrances there between, wherein each piece of information of the second sequence of information is compared to a corresponding piece of information of the fourth sequence of information,
at least one evaluation unit configured to indicate for each piece of information of the first sequence of information an indication of the level of human intelligibility of an output performed by the second device based on this piece of information and preferably to indicate the output performed by the second device based on this piece of information.

According to an embodiment, the evaluation unit is further configured to evaluate whether any detected aberrance between the second and fourth sequences of information is above or below a threshold of human perception.

Preferably, the communication unit comprises a separate communication channel that preferably uses a communication protocol that preserves information integrity to transmit the fourth sequence of information.

According to an embodiment, the device comprises a screen, a communication detection unit configured to detect whether the device is communicating with at least one other device, preferably in an audio and / or video call, and a control unit configured to, if the communication detection unit has detected that the device is communicating with at least one other device, control the device to display on the screen an indication of acoustic signals, preferably vocal signal, captured by the device via the input unit, wherein the indication preferably comprises sub titles, and / or an indication of acoustic signals output by the at least one other device, wherein the indication preferably comprises sub titles, and / or at least one statistical indicator of communication quality, such as an indication of a background noise, a signal-to-noise-ratio, a connectivity strength, a transmission delay or a synchronization delay.

Another aspect of the invention relates to a system comprising at least two devices configured to perform a method according to the present invention, preferably at least one device according to the present invention.

A system according to the present invention preferably comprises a first device according to the present invention, and a second device, comprising at least one input unit, such as a microphone; at least one output unit, such as a speaker; at least one conversion unit, configured to convert input received from a user via the input unit into a fifth sequence of information, at least one extraction unit, configured to generate a sixth sequence of information from the received input by extracting from the received input at least one piece of information corresponding to a past time instant, wherein the at least one piece of information is preferably time-stamped; and at least one communication unit, configured to transmit the fifth and sixth sequences of information to the first device; wherein the first device comprises a conversion unit, configured to generate a seventh sequence of information based on the fifth sequence of information received from the second device, wherein the seventh sequence of information corresponds to an output to be output by the first device on the basis of the fifth sequence of information; and the first device further comprises an extraction unit, configured to generate an eighth sequence of information from the seventh sequence of information by extracting from the seventh sequence of information at least one piece of information corresponding to a past time instant, wherein the at least one piece of information is preferably time-stamped; and the at least one comparison unit of the first device is configured to compare the sixth and eighth sequences of information to detect any aberrances there between, wherein each piece of information of the sixth sequence of information is compared to a corresponding piece of information of the eighth sequence of information.

In a system according to the present invention, the first and / or the second device preferably comprises a comparison unit and / or an evaluation unit.

Preferably, the at least one communication unit of the first device and the at least one communication unit of are configured to provide a separate communication channel, that preferably uses a communication protocol that preserves information integrity, to transmit the fourth sequence of information and / or the sixth sequence of information between the first and second devices. For example, such a communication channel may use the TCP communication protocol. Other data may be transmitted in another channel using the UDP communications protocol.

Another aspect of the invention relates to a memory device containing machine-readable instructions that when read by a device enable the device to perform a method according to the present invention.

In other words, the present invention may be described as follows:
A method for monitoring communication quality involves receiving raw audio data onto a first audio and text analyzer, wherein the raw audio data includes a first timestamp indicating a first time and receiving decoded audio data onto a remote audio and text analyzer, wherein the decoded audio data was generated by decoding encoded audio data, wherein the encoded audio data was generated by encoding the raw audio data, and wherein the decoded audio data includes the first timestamp indicating the first time. The raw audio data is converted into a first fragment of text by the first audio and text analyzer. The decoded audio data is converted into a second fragment of text by the remote audio and text analyzer. The second fragment of text is received by the first audio and text analyzer. The first fragment of text is compared to the second fragment of text; and it is indicated on a graphical user interface whether the first fragment of text exactly matches the second fragment of text.

Another method for monitoring communication quality involves receiving decoded audio data onto a first audio and text analyzer, wherein the decoded audio data was generated by decoding encoded audio data, wherein the encoded audio data was generated by encoding raw audio data, and wherein the decoded audio data includes a first timestamp indicating a first time. The decoded audio data is converted into a first fragment of text. A second fragment of text is received from a remote audio and text analyzer, wherein the raw audio data was converted by the remote audio and text analyzer into the second fragment of text, and wherein the second fragment of text also includes the first timestamp indicating the first time. The first fragment of text is compared to the second fragment of text; and it is indicated on a graphical user interface whether the first fragment of text exactly matches the second fragment of text.

Yet another method for monitoring communication quality involves receiving video data onto a first image recognition system, wherein the video data includes a first timestamp indicating a first time, wherein the decoded video data is received onto a remote image recognition system. The decoded video data was generated by decoding encoded video data and the encoded video data was generated by encoding the video data. The decoded video data received onto the remote image recognition system also includes the first timestamp indicating the first time. The method involves recognizing, by the first image recognition system, a first pattern in the video data and recognizing, by the remote image recognition system, a second pattern in the decoded video data. The recognized second pattern is received by the first image recognition system. The recognized first pattern is compared to the recognized second pattern and it is indicated on a graphical user interface whether the recognized first pattern exactly matches the recognized second pattern.

Further features, elements, advantages and effects of the present invention may become apparent from the following description of exemplary embodiments of the invention referring to the figures. In the figures, the same reference numerals indicate the same or similar elements.

The exemplary embodiments illustrate but not limit the present invention, as the present invention is defined by the claims.
Fig. 1 shows a first embodiment of the present invention;
Fig. 2 shows a second embodiment of the invention;
Fig. 3 shows a third embodiment of the invention;
Fig. 4 shows an exemplary graphical user interface of a device according to the present invention;
Fig. 5 shows a fourth embodiment of the invention;
Fig. 6 shows a fifth embodiment of the invention;
Fig. 7 shows a sixth embodiment of the invention;
Fig. 8 shows a seventh embodiment of the invention.

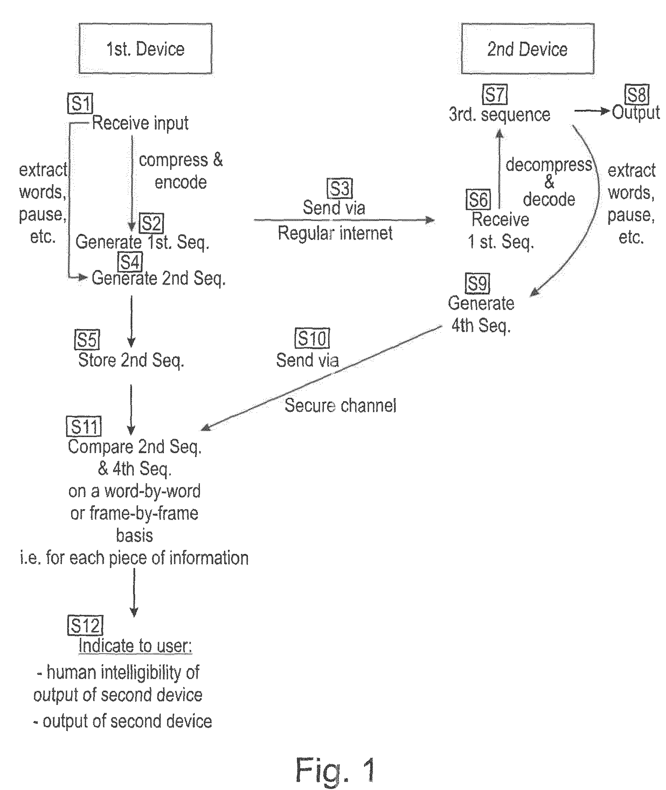

A method according to the invention is illustrated in the following non-limiting example relating to Fig. 1 in that in a video conference user speaks into a first device and a corresponding audio signal is received by a second device and reproduced to another user listening to the second device. The following description focusses on audio signals for ease of description, but the present invention is similarly applicable to video signals.

For example, by means of a first device, such as a smartphone or tablet, in step S1 an audio signal is received from a user. This audio signal is then compressed and encoded to generate in step S2 the first sequence of information. The compressed and encoded audio signal is then sent in step S3 to a second device, such as a smartphone or tablet, via the internet.

Based on the audio signal received from a user, the first device also generates in step S4 a second sequence of information by extracting from the received input at least one piece of information, for example a word or a pause contained in the audio signal or speech signal received from the user. This at least one piece of information corresponds to a past time instant. For example, the second sequence of information can contain the information that 5 ms ago, the user uttered the word "You". In this case, the past time instant would be "- 5ms". Preferably the at least one piece of information is time-stamped. For example, the word "You" may be linked to an absolute time value, for example of the Universal Coordinated Time (UTC), to indicate when the user uttered this word. Alternatively, in this example, the word "You" may be linked to a relative time value, for example "30 sec after starting the videoconference".

The second sequence of information may be regarded as the extracted content of the audio signal received from the user of the first device. In other words, the second sequence of information may be regarded as a reference message indicating the content, preferably the content as is intelligible to a human being, of the audio signal received from the user of the first device. For example, the second sequence of information can be generated through a speech-to-text-conversion to capture the meaning of the speech of the user of the first device. In step S5, the second sequence of information is then stored in the first device. The second sequence of information may thus be regarded as a sender-side reference message.

At the second device (corresponding to the receiver-side in this example), e.g. a smartphone or tablet, the first sequence of information is received in step S6. In step S7, a third sequence of information is generated by means of the second device, for example by decompressing and decoding the audio signal of the first sequence of information. The decompressed and decoded the audio signal of the third sequence of information corresponds to an output to be output by the second device on the basis of the first sequence of information in step S8. In other words, the third sequence of information may be regarded as reflecting the actual output, e.g. speech output via speakers of the second device, to the user of the second device. Whereas the first sequence of information may be regarded as what is actually said by the user of the first device, the third sequence of information may be regarded as what is actually reproduced by the second device.

Based on the third sequence of information the second device in step S9 generates a fourth sequence of information by extracting from the third sequence of information at least one piece of information, for example a word or a pause contained in the audio signal or speech signal to be output to the user. This at least one piece of information preferably corresponds to a past time instant, wherein the at least one piece of information is preferably time-stamped. The fourth sequence of information is preferably generated in the same way as the second sequence of information. For example, the fourth sequence of information can be generated through a speech-to-text-conversion to capture the meaning of the speech reproduced by the second device to the user of the second device. The fourth sequence of information may thus be regarded as a receiver-side reference message. The fourth sequence of information may be regarded as the extracted content of the audio signal to be reproduced to the user of second first device. In other words, the fourth sequence of information may be regarded as a reference message indicating the content, preferably the content as is intelligible to a human being, of the audio signal received by the user of the second device.

Preferably, the second and fourth sequences use the same reference framework for linking the at least one piece of information to a past time instant and / or for time stamping, so that the second and fourth sequences of information can be compared on a piece of information-by piece of information -basis for each past time instant. In other words, preferably the pieces of information of the second and fourth sequences of information are co-registered in time, to allow for each point in time a comparison of the pieces of information of the second and fourth sequences for this point in time. In yet other words, the same point of time is used as a reference for linking the at least one piece of information of the second and fourth sequences to a past time instant and / or for time stamping. For example, if absolute timestamps are used, both the second and fourth sequences may rely on UTC. As using the same reference framework can be important for any comparison, the same applies to the sixth and eighth sequences. The term "co-registered" preferably means that the second and fourth sequences are preferably referenced to the same reference.

The fourth sequence of information is then transmitted from the second device to the first device in step S10.

Preferably, the fourth sequence of information is transmitted from the second device to the first device via the internet in a separate channel that is separate from a channel used to transmit the first sequence of information. In other words, preferably there is a separation of the communication channels between the first and second devices for transmitting audio signals, such as the compressed and encoded audio data of the first sequence of information, and for transmitting extracted content of the audio signals, such as the fourth sequence of information.

Preferably, the channel of communication for transmitting the fourth sequence of information is configured to offer a higher level of cyber security and / or transmission fidelity than the channel of communication for transmitting the first sequence of information.

Generally, the amount of data transmitted in the channel of communication for transmitting the extracted content is significantly lower than the amount of data transmitted in the channel of communication for transmitting the actual compressed and encoded audio signal. Thus, transmitting the extracted content, e.g. the fourth sequence of information, in addition to the actual audio signal, e.g. the first sequence of information, will only require a negligible increase in processing power

For example, the first sequence of information may comprises pieces of information relating to speech signals such as words, but also may include background noise as well information regarding volume, pitch and speed of the audio signal. The fourth sequence of information may be a file in text-format generated through speech-to-text-conversion and comprising only the human intelligible content "You-should-not-do-it". After the fourth sequence of information has been transmitted to the first device, the first device in step S11 compares the second and fourth sequences of information to detect any aberrances there between. The comparison is preferably performed on a piece of information-by piece of information -basis for each past time instant. In other words, preferably each piece of information of the second sequence of information is compared to a corresponding piece of information of the fourth sequence of information. Preferably, time-stamped pieces of information of the second and fourth sequences of information are co-registered relating to time.

For example, the piece of information of the second sequence of information corresponding to the past time instant of - 5 ms is the word "You", because the user uttered the word "You" at that time point. The piece of information of the fourth sequence of information corresponding to the past time instant of - 5 ms is the word "You", because the audio output to be reproduced to the user of the second device for that time point is the word "You". In this case, for this past time instant and / or piece of information there are no aberrances between the audio signal captured by the first device from the user (sender) and the audio signal reproduced from second device to the other user (receiver).

Preferably the past time instances and / or the pieces of information comprised in the sequences of information relate to entities relevant to the human understanding of the information contained in data the sequence of information is generated from. For example, a piece of information may relate to a word or a pause identified in a continuous stream of audio data captured from a speaking user. Similarly, for example the continuous stream of audio data captured from a speaking user may be separated into discrete time instants corresponding to a word or a pause or another entity relevant to the human understanding of the audio data. The term "past time instant" may thus also be understood as "past time interval".

For example, from the continuous stream of audio data captured from a user saying "You should not do this" the pieces of information "You", "pause", "should", "pause", "not", "pause", "do" "pause", " this", "long pause" may be extracted. Each piece of information relates to an entity contained in the audio data that is relevant to and captures a human understanding of the audio data.

Each piece of information may be time-stamped so that each piece of information is allocated to a past time instant, for example the word "You" is allocated to -5ms, the entity "pause" is allocated to -3 ms, and the word "should" is allocated to -2 ms. Thus, when comparing two sequences of information of this format are compared it is possible to compare the sequences of information an a information-by piece of information -basis and / or a past time instant by past time instant-basis.

In principle, it is also possible to compare the second and fourth sequences of information without the use of timestamps. For example, the second and fourth sequences of information may be aligned to detect any aberrances there between. For example, a correlation algorithm may be used to align the pieces of information of the second and fourth sequences and detect aberrances there between. As the comparison between the sixth and eighth sequence is similar to or the same as the comparison between the second and fourth sequence of information, any description made in this disclosure relating to the comparison of the second and fourth sequences of information may equally apply to the comparison of the sixth and eighth sequences of information.

In this example, the first device in step S12 then indicates to the user (sender) for each piece of information of the first sequence of information an indication of the level of human intelligibility of an output performed by the second device based on this piece of information.

For example, this indication can take the form of subtitles of the audio output being generated by the second to device to the user (receiver) based on the audio input captured by the first device. In other words, the first device may be used to provide feedback to the user (sender) regarding what was received by the user (receiver) of the second device.

For example, the user of the first device said "You should not do this", but during the videoconference the word "not" was lost, so the user of the second device actually received the message "You should do this". The user of the first device may in this case receive the indication that the word "not" was lost during the transmission.

For example, on the first device the subtitle "You should not do this" may appear to indicate to the user of the first device the loss of the word "not".

Alternatively or additionally, an indication of the output performed by the second device based on this piece of information may be provided to the user of the first device, in this example a subtitle reading "You should do this".

Subtitles are only one option for providing an indication for each piece of information of the first sequence of information an indication of the level of human intelligibility of an output performed by the second device based on this piece of information and any other suitable for of indication is also within the scope of then present invention.

The severity of any aberrances and / or the level of human intelligibility of each piece of information may also be indicated to the user, e.g. by using a colour code that indicates words transmitted with satisfactory transmission fidelity in green and indicates a word transmitted in a form that is not intelligible to a human being or that has been omitted completely in red or strike-through.

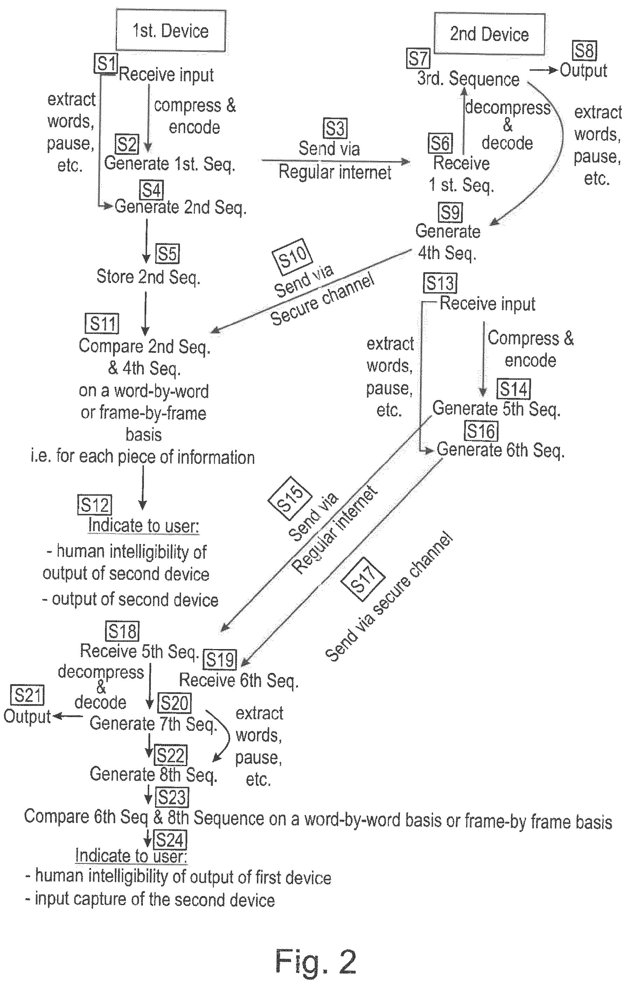

Fig. 2 shows another embodiment of the present invention. Steps S1-S12 correspond to steps S1-S12 of Fig. 1 and thus a redundant description of these steps is omitted.

In step S13, input from a user, e.g. an audio signal such as a speech signal, is received by the second device. This audio signal is then compressed and encoded to generate a fifth sequence of information in step S14. The compressed and encoded audio signal is then sent in step S15 to the first device, such as a smartphone or tablet, via the internet.

Based on the audio signal received from the user, the second device also generates in step S16 a sixth sequence of information by extracting from the received input at least one piece of information, for example a word or a pause contained in the audio signal or speech signal received from the user. This is the same or similar to the generating of the second sequence in step S4 by the first device.

In step S17, the sixth sequence of information is then transmitted via a separate secure communication channel to the first device.

At the first device (corresponding to the receiver-side in this example), e.g. a smartphone or tablet, the fifth sequence of information is received in step S18 and the sixth sequence of information is received in step S19.

In step S20, a seventh sequence of information is generated by means of the first device, for example by decompressing and decoding the audio signal of the fifth sequence of information. The decompressed and decoded the audio signal of the third sequence of information corresponds to an output to be output by the second device on the basis of the first sequence of information in step S21.

Based on the seventh sequence of information the first device in step S22 generates an eighth sequence of information by extracting from the seventh sequence of information at least one piece of information, for example a word or a pause contained in the audio signal or speech signal to be output to the user.

Then, the first device in step S23 compares the sixth and eighth sequences of information to detect any aberrances there between. The comparison is preferably performed on a piece of information-by piece of information -basis for each past time instant. The comparison is performed in the same or a similar way to the comparison described in step S11.

In this example, the first device in step S24 then indicates to the user (in this instance acting as the receiver) for each piece of information of the first sequence of information an indication of the level of human intelligibility of an output performed by the first device based on this piece of information as well as indication of the content of the audio signal captured by the second device, e.g. what the user of the second device said. The indication is performed in the same or a similar way to the indication described in step S12.

Fig. 3 shows a system according to the invention comprising a first device and a second device that are used by a first and second user, respectively to carry out a videoconference and preferably to perform a method as disclosed in Fig. 1 or Fig. 2.

The first device (left-hand side in Fig. 3) comprises a microphone 1 and a camera 2 for receiving input from the first user and comprises a speaker 3 and a display 4 for outputting or reproducing output to the first user.

The first device comprises a conversion unit 5, configured to compress and encode audio signals, e.g. input received from the first user.

The first device also comprises an extraction unit 6 configured to extract entities relevant to human understanding from the received audio input, e.g. speech, of the first user. The extraction unit 6 in this example is a speech-to-text-converter that generates a text-file from the captured speech. The first device further comprises a memory in that the text-file is stored.

The first device further comprises a communication unit 7 configured to transmit data to the second device and receive data from the second device. The communication unit 7 is configured to communicate with the second device via two separate channels that exist simultaneously. In this example, one channel is used for sending the compressed and encoded audio signal received from the first user via the microphone 1 and the second channel is used to send the text-file generated by the extraction unit 6.

The second device receives the compressed and encoded audio signal via the communication unit 7 and decompresses and decodes the audio signal via a conversion unit 8 configured to decompress and decode audio signals. Based on the decompressed and decoded audio signal, the second device outputs an audio signal via the speaker 3.

From decompressed and decoded audio signals reflecting the audio signal output by the speaker 3 of the second device, entities relevant to human understanding from the audio output are extracted using an extraction unit 9. The extraction unit 9 in this example is a speech-to-text-converter that generates a text-file from the audio signal indicating the acoustic output to be reproduced to the user.

The text file generated by the extraction unit 9 of the second device is sent via the communication unit 7 of the second device to the communication unit 7 of the first device.

The first device also comprises a comparison unit 10 configured to compare the text-file generated by the extraction unit 6 of the first device with the corresponding text file generated by the extraction unit of the second device received from the second device.

Referring to the methods disclosed in Fig. 1 and 2, the comparison unit 10 of the first device in Fig. 3 may be configured to compare the second sequence of information to the fourth sequence of information and / or to compare the sixth sequence of information to the eight sequence of information.

In order to avoid redundant description, in Fig. 3 it is indicated which line in the diagram corresponds to which sequence of information.

Furthermore, the first device comprises an evaluation unit configured to evaluate the level of human intelligibility of an output performed by the second device based on encoded and compressed audio data sent to the second device by the first device and preferably to indicate the output performed by the second device on the display 4 of the first device.

Of course, the system of two devices as shown in Fig. 3 is only exemplary and a system according to the present invention may also comprise at least two devices each configured like the first device in Fig. 3 or at least two devices each configured like the second device in Fig. 3.

In other words, Fig. 3 may be described as follows: The underlying idea of this exemplary embodiment is to convert the speech captured by the microphone at the first device into text and store it. Then, at the second device, the audio signal that is to be reproduced at the speakers (which, in principle, should correspond to the speech recorded at the first device) is also converted into text, preferably, a string of text. This string is then sent to the first device, where it is compared to the stored text and then displayed on the screen. Note that this process involves analysing the human-understandable message (application level), an advantageous aspect of this example; another advantageous aspect is the identification of past time instants and a quality indication (message intelligibility) for each of them.

For example, the user of the first device says a sentence. These words are captured by the microphone and digitised; these digital audio samples preferably form raw audio signal. The raw audio signal is encoded, compressed and transmitted to the second device. According to this embodiment, the raw audio signal is also delivered to software module A1. Software module A1 performs speech-to-text conversion. The output of software module A1 in this embodiment is a string, preferably a sequence of characters conforming words which conform sentences, with timestamps. Therefore software module A1 is preferably configured to receive a continuous digital input stream, corresponding to the audio captured by the microphone. Sometimes some processing is performed on the input audio signal, to e.g. reduce background noise. As a variation, the input signal provided at the input of software module A1 may be a processed signal coming from the videoconference system (e.g. a filtered signal). The input signal could also be the compressed signal, or the compressed, encoded and decoded signal (all done at the first device), which could be used to evaluate whether there is e.g. too much signal compression and that compromises the intelligibility of the content. The software module A1 is preferably further configured to split the continuous input data stream into segments to process each of them at once. This requires a memory to store segments of the incoming signal. Each of the segments is analysed, possibly using a trained model or based on machine learning techniques, to translate the sequence of raw audio samples into words.

The incoming audio signal can be timestamped based on a synchronisation device such as an internal clock. The term "timestamped" preferably means that each sample in the raw signal has a value that identifies the moment in time when it was acquired; for instance, the time elapsed since a reference event or a value in UTC format (e.g. January 28^{th} 2022, 17:03:01.23). The reference event can be an absolute time instant (e.g. 1st of January of 1970 at 00:00:00 UTC) or a relative time instant (e.g. the moment when the device was turned on). The timestamp may not be explicit for all timestamp samples, only a few values or parameters may be stored and the rest can be calculated or inferred.

Since this invention preferably involves communicating through internet, it can be assumed that the internal clock is synchronised with an external reference (e.g. via the Network Time Protocol, NTP). Such synchronisation typically yields a low error, in the range of milliseconds (i.e. small enough to be neglected in speech applications). After the speech-to-text conversion, the identified words can be timestamped as well, indicating e.g. the moment when the pronunciation of the word started and the moment when the pronunciation of the word ended. Likewise the pause between words can be calculated as well. Alternatively, instead of relying on network time, even though it is very accurate, it is often simpler to rely on time periods elapsed from a well defined starting point in time.

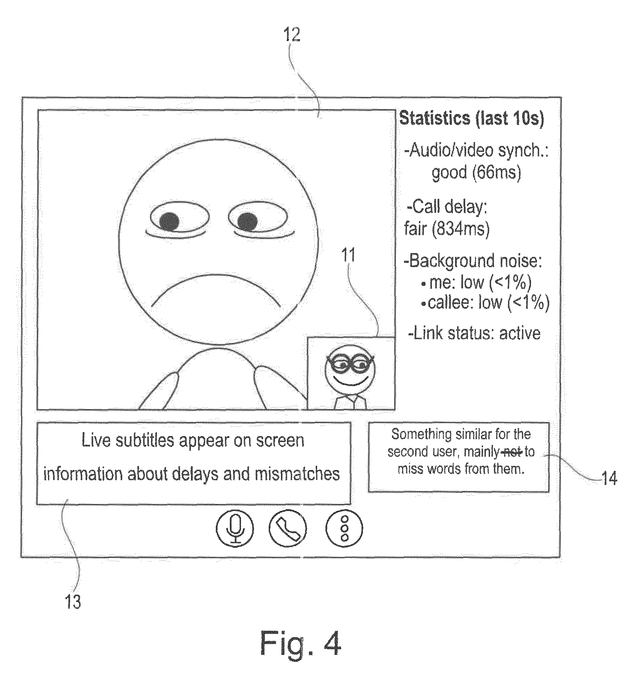

The output of software module A1 is delivered to software module B, which first displays the text on the screen of the user of the first device, e.g. as shown in figure 4. It preferably is clear, in the display that this text corresponds to the analysis or speech-to-text-conversion carried out at the first device. For instance, the text may appear in white colour. Besides the text itself, some information regarding the time-length of the words, sentences or pauses may be displayed as well. Whilst this is only an intermediate step, this information may already be valuable to the user of the first device. Software module B displays the text on the display as soon as the text is available, in white colour to indicate that this corresponds to the data directly captured by the microphone. Possibly information about the time-length can be displayed as well. This text, corresponding e.g. to automatic subtitles of the speech of the first user, can be used by the first user as an indication of whether they are speaking clearly, too fast or too slow. For instance, if the speech-to-text system fails to identify the words, it may mean that the first user is not vocalising clear enough; or that too much background noise is being captured by the microphone.

At this moment in time, software module B waits for the information coming from the second device. If the first user keeps on talking, multiple text lines may be displayed at the first device in the same way and with the same information as described earlier. If too many lines appear without feedback from the second device, this is already an indication that the communication is not working properly and an indication of an aberrance may be displayed, since the information coming back from the second device is preferably automatic (no manual action).

In general, the invention is preferably performed fully automatic with no explicit user input being required to send summary messages, such as the fourth and sixth sequences of information between the first and second devices.

In parallel to the process described so far, the digital audio signal that was delivered to software module A1 was also encoded, compressed and transmitted via internet to the second device. The second device receives the data from internet and it reconstructs the message. This whole process from microphone capture at the transmitter through encoder, network transmission, receiver decoder, jitter-buffer and finally playback naturally adds a delay. Ultimately an audio signal is reconstructed and, as soon as it is available, it is played at the speakers of the second device.

At the moment that the digital audio signal has been reconstructed and is ready to be converted back to analogue to be reproduced at the speaker, according to this embodiment, it is also sent to software module A2 of the second device.

This block essentially performs the same operation to software module A1: convert the speech (reconstructed digital audio samples in this case) into text and timestamp it. This output (e.g. a string with timestamps) is then sent back via internet to the first device and may be regarded as a summary of the message received by the first device. A string (with timestamps) is much smaller than digital audio and video signals. The amount of information that is sent back from the second to the first device is thus almost negligible compared to the amount of information that is sent when transmitting the actual audio and video data. Because of the smaller size, this information can be sent via a protocol that guarantees information integrity, such as TCP, so that if a packet is lost, it is retransmitted until its reception is acknowledged at the other side. This eliminates the possibility of the original message being properly delivered but not properly notifying the sender (the message is lost on the way back).

Preferably the timestamps are absolute. If the clock synchronisation is not accurate enough, a relative timestamp may be used. In both cases, the time-length of each word, sentence and pause can be evaluated with high precision. If absolute timestamps are available, then it is also possible to evaluate the communication delay between the data captured by the microphone at the first device and the audio reproduced at the second device. If using the RTCP protocol (RTP control protocol), which is normally used for both audio and video communication, this delay can be straightforwardly monitored.

Software module A2 analyses the speech of the user of the first device. When receiving the message at the first device, it is delivered to software module B. The received message is compared to the message that had been stored. This comparison is very simple, since both messages comprise text strings (message) and numbers (timestamps). The timestamps may be compared to determine whether the audio was reproduced at the same speed and whether the pauses between words are properly respected (note that the information loss can also involve losing the pauses and then the words would be pronounced together one right after the other one). With absolute timestamps, also the communication delay can be determined.

Alternatively, when only relative timestamps are available, the total delay can be estimated from the moment when the message was sent until the text corresponding to that message is back. Whilst this leads to an overestimation of the delay (compared to the actual delay, it involves an additional speech-to-text conversion and travelling back), it also defines an upper bound for the delay. If this upper bound is already small enough, then so is the actual delay.

After having received the information and having compared it, it is only left to display it in a simple way for the user of the first device. For the speech part, the simplest way is to display text, like subtitles. To acknowledge the reception and highlight the mismatches, a different colour can be used. For instance, green may indicate matching text and time lengths; yellow may indicate time lengths differing more than e.g. 5%; red may indicate that either a word was not reproduced at the other side (red with strikethrough) or that an unexpected word arrived (red).

No action is automatically taken based on the differences. The differences are simply reported to the user of the first device as a means for them to evaluate the necessity of e.g. repeating part of the speech.

The information may be displayed in different ways. For instance, regarding the delays and time-length of the words and pauses, lines or numbers can be used instead of colours. The length of the line may indicate the time-length of the word or pause; two different lines can be used, one for the first device and one for the second device, to compare that the length of both lines is similar.

The software modules A1-A4 shown in Fig. 3 may all be identical and may be regarded as extraction units 6. The software module B may be regarded as a comparison unit 10.

Fig. 4 shows an exemplary graphical user interface of a device according to the present invention. For example, the device may be the first or second device of Fig. 3.

On the graphical user interface (GUI) a video of two users or participants in a videoconference is displayed. For example, if the GUI is shown on the display 4 of the first device, a small video panel 11 shows the user of the first device, i.e. the first user. If viewed by the first user, the panel 11 shows the "self-video", i.e. the video captured of the first user during the videoconference. The large panel 12 shows the second user.

A panel 13 indicates to the first user the acoustic output that the second user received based on the captured speech signals from the first user. In this example, during the videoconference, live subtitles appear in panel 13, preferably while the first user is talking, to indicate what the second user has received based on the captured speech signals from the first user. The information contained in the subtitles in panel 13 may relate to delays, mismatches or omitted words.

For example, if the first user said "You should not do this" and the second user heard "You should do this", because the word "not" was lost during transmission, a subtitle in panel 13 may appear that reads "You should do this".

Similarly, in panel 14, live subtitles appear, preferably while the second user is talking, to indicate what the first user has received based on the captured speech signals from the second user. Panel 14 thus assists the first user in ensuring that no words from the second user a missed or omitted.

For example, the second user may reply to the message "You should do this" received by the second user "I do want to". In this case, in panel 14 the subtitle "I do want to" appears. This allows the first user to distinguish the situation in that the second user says "I do want to" without any loss in transmission from the situation in that the second user says "I do not want to" with the word "not" being lost in transmission, because in this case the subtitle in panel 14 would read ""I do n want to".

In addition to that, general call quality statistics, such as the level of background noise, the audio and video synchronization or the call delay etc. may be indicated to the first user on the GUI. In the example shown in Fig. 4 these general call quality statistics are displayed next to the panel 12.

Relating to audio and video synchronization, it is important to remember that the audio signal and the video signal are independent signals which can get out of synchronisation, especially when the communication channel is unreliable and multiple packets of data may be lost at once. According to an example of the invention relating to both the audio and the video signals, an extracted frame number for the video signal can be sent together with the timestamped text from the second device to the first device; the comparison unit 10 may then analyse whether the extracted number associated with a certain text matches the number that was added to the same text at the first device. Mismatches in this check reveal synchronisation issues at the second device. Automatic corrective actions may be taken (e.g. sending to the second device a message indicating to duplicate a few frames to restore the synchronisation) or the aberrance can be simply reported to the user of the first device.

The call delay can be precisely evaluated based on the extracted frame number or the text generated by the speech to text conversion, in combination with absolute timestamps. Each extracted frame number or text from audio data may be timestamped (if relating to audio data, the speech-to-text conversion can be used to identify characteristic instants in the speech, like the beginning of a word) thereby defining a pair of a characteristic events with its corresponding time instant of reproduction at the second device. This pair can be sent via the secure channel to the comparison unit, where its counterpart audio segment (or reference audio signal) can be found; the delay can be evaluated then as the difference between timestamps.

As discussed above, when absolute timestamps are not available, an upper bound for the delay can be determined. Instead of comparing, for a certain text element, the timestamp at the first device and at the second, the timestamp at the first device is now compared to the time instant when this particular text element was received again by the first device via the secure channel.

In case of a videoconference with multiple participants, for each of the participants the GUI as shown in Fig. 4 may be presented. In other words, the videoconference with multiple participants may be represented as multiple simultaneous videoconferences with two participants.

Alternatively, multiple panels 14 may be presented in one GUI as shown in Fig. 4 reflecting the messages received from different participants of the videoconference.

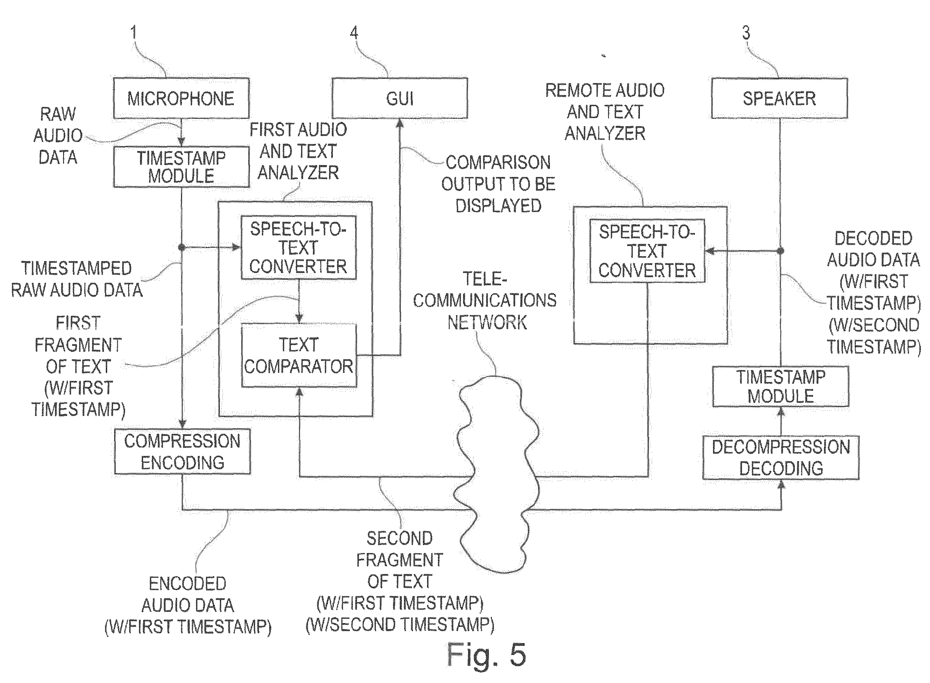

In other words, the invention may be described as follows. In the examples of Fig. 5-7, a first device and a second device communicate with each other via a telecommunications network.

As shown in Fig. 5, audio data may be acquired by a microphone 1 of a first device. The raw audio data is sent to a timestamp module to generate timestamped raw audio data. The timestamped raw audio data is compressed and encoded to generate encoded audio data with a first timestamp.

The encoded audio data with the first timestamp is sent via a telecommunications network to a second device, where it is decompressed and decoded and entered into a timestamp module of the second device to generate decoded audio data with a first timestamp and a second timestamp. Based on the decoded audio data with the first timestamp and the second timestamp the second device outputs an audio signal via speaker 3.

The timestamped raw audio data is also entered into a first audio and text analyzer of the first device. The first audio and text analyzer comprises a speech-to-text-converter and a text comparator. In the first audio and text analyzer, the timestamped raw audio data is converted into a first fragment of text with a first timestamp by the speech-to-text-converter and the first fragment of text with the first time stamp is input into the text comparator.

The decoded audio data with the first timestamp and the second timestamp is entered into a remote audio and text analyzer of the second device. The remote audio and text analyzer comprises a speech-to-text-converter that converts the decoded audio data with the first timestamp and the second timestamp into a second fragment of text with the first timestamp and the second timestamp. The second fragment of text with the first timestamp and the second timestamp is sent to the text comparator of the first device. The text comparator compares the first fragment of text with the first timestamp to the second fragment of text with the first timestamp and the second timestamp to determine whether the first and second fragments of text are exactly the same or the same to a degree that a human being would not detect any difference. The result of the comparison of the text comparator is then displayed on the GUI of the display 4.

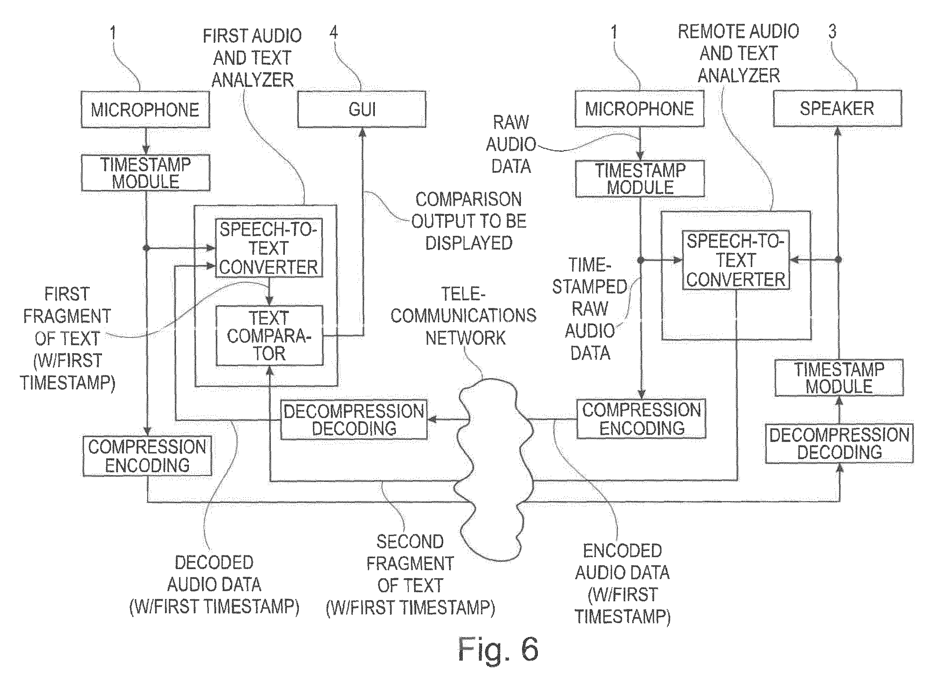

Fig. 6 shows the embodiment of Fig. 5 with some additional features. As shown in Fig. 6, raw audio data are captured by the microphone 1 of the second device. The raw audio data is sent to a timestamp module to generate timestamped raw audio data. The timestamped raw audio data is compressed and encoded to generate encoded audio data with a first timestamp.

The encoded audio data with the first timestamp is sent via a telecommunications network to the first device, where it is decompressed and decoded to generate decoded audio data with the first timestamp that is entered into the speech-to-text converter of the first audio and text analyzer. The speech-to-text converter of the first audio and text analyzer generates a first fragment of text with the first time stamp that is input into the text comparator.

The timestamped raw audio data are also entered into the speech-to-text converter of the remote audio and text analyzer that generates a second fragment of text with the first timestamp. The second fragment of text with the first timestamp is sent to the first device via the telecommunications network and entered into the text comparator. The result of the comparison of the text comparator is then displayed on the GUI of the display 4 of the first device.

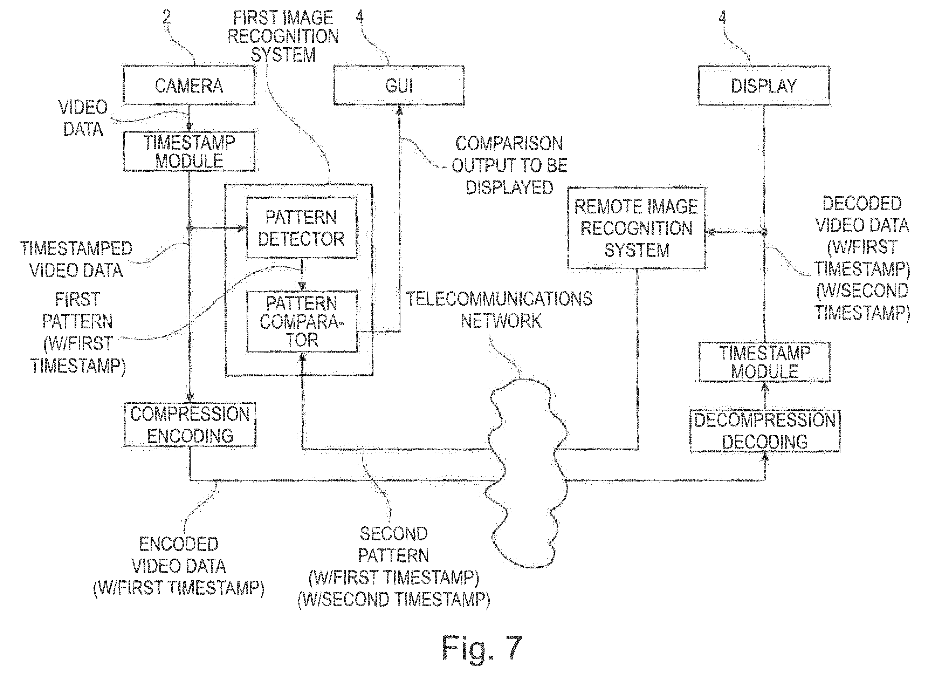

Fig. 7 shows an example according to that the present invention is applied to video data. Video data are acquired by a camera 2 of the first device. The video data is sent to a timestamp module to generate timestamped video data. The timestamped video data is compressed and encoded to generate encoded video data with a first timestamp.

The encoded video data with the first timestamp are sent via a telecommunications network to the second device, where they are decompressed and decoded and entered into a timestamp module to generate decoded video data with the first timestamp and the second time stamp. Based on the decoded video data with the first timestamp and the second time stamp the second device displays an image and / or video on the display 4.

The timestamped video data are also entered into a first image recognition system of the first device. The first image recognition system comprises a pattern detector and a pattern comparator. The pattern detector detects a pattern with the first timestamp in the timestamped video data and sends the first pattern with the first timestamp to the pattern comparator.

The decoded video data with the first timestamp and the second timestamp is entered into a remote image recognition system of the second device. The remote image recognition system comprises a pattern detector. The pattern detector detects a second pattern with the first timestamp and the second timestamp in the decoded video data and sends the second pattern with the first timestamp and the second timestamp to the pattern comparator. The pattern comparator compares the first pattern to the second pattern. The result of the comparison of the pattern comparator is then displayed on the GUI of the display 4 of the first device.

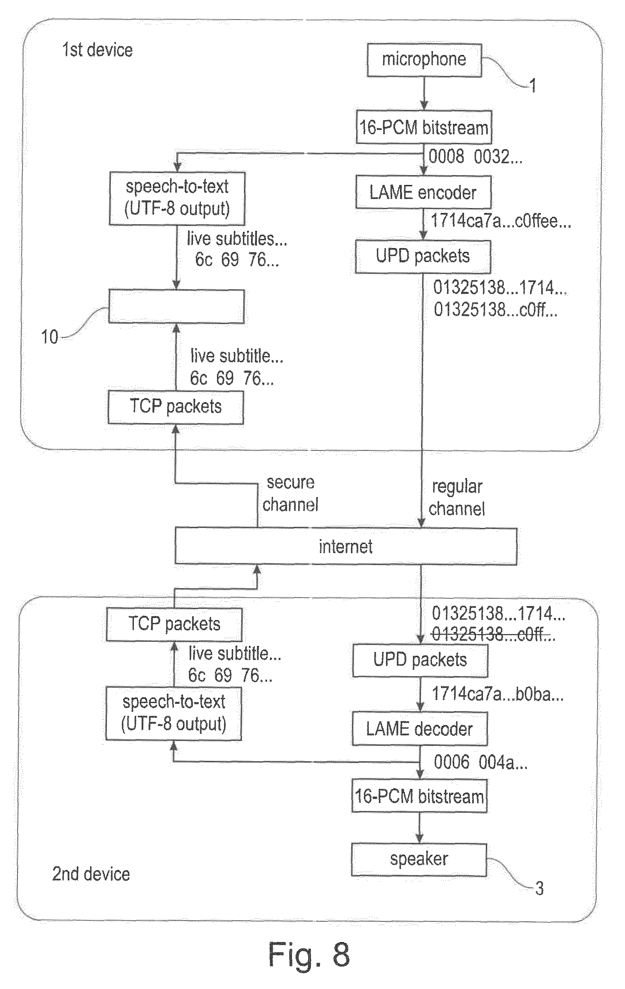

Fig. 8 provides more detail regarding the data transmitted in embodiments of the present invention.

Speech by the first user is captured by the microphone 1 of the first device. The acquired audio data for example takes the form of a pulse code modulation (PCM) bitstream showing the value of each 16-bit sample in hexadecimal. Two exemplary samples are displayed: 0008 and 0032.

The PCM bitstream is then converted, for example by a LAME encoder that converts the input bitstream into another bitstream, for example into MP3-format. The encoded bistream is split into segments. Two such segments are shown: 1714ca7a and c0ffee.

Each of the segments is sent in a user datagram protocol (UDP) package to the second device. Two such packages are shown: 01325138....1714ca7a and 01325138....c0ffee. The first numbers indicate the header, which does not correspond to audio data. After the header comes the body with audio data (the message).

When transmitting the packages by internet, some packets may be lost, as is indicated by the strikethrough. In this example, the package 01325138....c0ffee is lost.

The received UDP packages are unpacked by the second device and a bitstream is created. Ideally the unpacked content should be the same as the packaged content, but due to lost packages and errors, it may differ.

The incoming bitstream is decoded by a LAME decoder and an audio signal is recovered. Due to compression losses, even if no packages would have been lost, the exact original message may not be recovered.

In the first and second devices, the PCM bitstreams are sent to a speech-to-text conversion module, which converts the audio data or samples (e.g. a waveform) into a sequence of characters (in this example, encoded in UTF-8). For example, each group of 2 bytes corresponds to a character (6c -> I, 69 -> i, 76 -> v, ...). The space (20) can be used to split the characters into words.

In contrast to the audio data that is being transmitted in UDP packages or packets, the output of the speech to text conversion module is sent as transmission control protocol packages or packets. Thus, there are two separate communication channels employing different communication protocols. A first channel using a UDP communication protocol and a separate second channel using a TCP communication protocol.

The TCP protocol may be regarded as having a higher transmission fidelity and cyber security than the UDP communication protocol.

Simply comparing the words of the texts fragments character by character or word-by word, or in a more general wording entity-by-entity, can reveal differences:
For example, the output of the speech-to-text-conversion module of the first device may be as follows:
   6c 69 76 65 20 73 75 62 74 69 74 6c 65 73 20 61 70 70 65 61 72
And the output of the speech-to-text-conversion module of the second device may be as follows:
   6c 69 76 65 20 73 75 62 74 69 74 6c 65 20 61 70 70 65 61 72

The output of the speech-to-text-conversion module in this example is in 8-Bit UCS Transformation Format (UTF-8).

The comparison unit 10 of the first device compares these two output sequences. The output of the speech-to-text-conversion module of the first device comprises an additional 73 between 65 and 20. This implies that the character corresponding to 73 was not received by the user of the second device.

Because of the timestamps, it is possible to automatically synchronise the output of the speech-to-text-conversion module of the second device with the output of the speech-to-text-conversion module of the first device, without having to correlate signals.

The amount of data in bytes sent via the TCP channel is significantly lower than the amount of data sent via the UDP channel.

For example, a person uttering the phrase "live subtitles appear on screen" leads to 2,8s of audio signal corresponding to 22400 bytes of data to be packaged and transmitted.

In contrast, the corresponding UTF-8 output of a speech-to-text-conversion module converting the phrase "live subtitles appear on screen" into text corresponds to only 31 bytes. The amount of data required to transmit the same amount of human intelligible information is thus 1000 times smaller.

At the receiver side, the message "live subtitles appear on screen" may be reproduced as "life subtitles appear on screen". The difference in sound between the words "live" and "live", however, is small enough for the content / meaning of the message to be properly received.

The person skilled in the art will understand that when in this disclosure alternative wording is used to describe the same or similar subject-matter, the alternative terms or words may be used interchangeably or as synonyms.

## Claims

1. A method for monitoring the quality of communication between at least two devices, comprising:
- Receiving, by means of a first device, input from a user;
- Converting the input received from the user into a first sequence of information;
- transmitting the first sequence of information to a second device,
- Generating a second sequence of information based on the received input by extracting from the received input at least one piece of information corresponding to a past time instant, wherein the at least one piece of information is preferably time-stamped;
- Storing the second sequence of information in the first device;
- Generating a third sequence of information by means of the second device, wherein the third sequence of information corresponds to an output to be output by the second device on the basis of the first sequence of information;
- Generating a fourth sequence of information based on the third sequence of information by extracting from the third sequence of information at least one piece of information corresponding to a past time instant, wherein the at least one piece of information is time-stamped
- Transmitting the fourth sequence of information to the first device;
- Comparing the second and fourth sequences of information to detect any aberrances there between, wherein each piece of information of the second sequence of information is compared to a corresponding piece of information of the fourth sequence of information,
- Indicating, through displaying, by means of the first device for each piece of information of the first sequence of information an indication of the level of human intelligibility of an output performed by the second device based on this piece of information and preferably an indication of the output performed by the second device based on this piece of information,
**characterized in that**
a separate communication channel employing a transmission control protocol that preserves information integrity is used to transmit the fourth sequence of information between the second and first devices.

2. The method of claim 1, further comprising the step: evaluating whether any detected aberrance between the second and fourth sequences of information is above or below a threshold of human perception.

3. The method of claim 1, wherein the at least one piece of information is extracted from the received input such that the at least one piece of information corresponds to an entity, such as a word, a number, a pause, a frame, an image, or a sound, comprised in the input that is relevant for human intelligibility of the input.

4. The method according to one of the preceding claims, wherein the input received from the user is acoustic input, which is input relating to speech, and the input is converted into the first sequence of information by compressing and / or encoding.

5. The method according to one of the preceding claims, wherein the second and fourth sequences of information are generated by a speech-to-text converter and comprise text.

6. Method according to one of the preceding claims, wherein the output performed by the second device based on the third sequence of information is indicated to a user of the first device, by displaying subtitles corresponding to acoustic signals relating to speech, output by the second device, on an output unit, embodied by a screen, of the first device.

7. Method according to one of the preceding claims, wherein the indication of the level of human intelligibility of an output performed by the second device based on this piece of information of the first sequence of information can relate to a symbol, a font or a color code.

8. Method according to one of the preceding claims, wherein the indication of the level of human intelligibility of an output performed by the second device based on this piece of information of the first sequence is directed to a different sensory modality of the user than the input received from the user.

9. Method according to one of the preceding claims, wherein an identifier is added to each piece of information of the second sequence of information and a corresponding identifier is extracted from each piece of information of the fourth sequence of information and the identifiers of the pieces of the second and fourth sequences of information are compared to detect any aberrances of the first and second sequences of information.

10. Device, preferably configured to perform a method according to one of the preceding claims, wherein the device comprises:
- At least one input unit, such as a microphone (1);
- At least one output unit, such as a speaker (3);
- At least one conversion unit (5, 8), configured to convert input received from a user via the input unit into a first sequence of information,
- At least one extraction unit (6, 9), configured to generate a second sequence of information from the received input by extracting from the received input at least one piece of information corresponding to a past time instant, wherein the at least one piece of information is preferably time-stamped;
- A memory for storing the second sequence of information;
- At least one communication unit (7), configured to transmit the first sequence of information to a second device and receive from the second device a fourth sequence of information, wherein the fourth sequence of information corresponds to at least one piece of information corresponding to a past time instant, wherein the at least one piece of information is time-stamped, extracted from a third sequence of information corresponding to an output to be output by the second device on the basis of the first sequence of information;
- At least one comparison unit (10), configured to compare the second and fourth sequences of information to detect any aberrances there between, wherein each piece of information of the second sequence of information is compared to a corresponding piece of information of the fourth sequence of information,
- At least one evaluation unit configured to indicate for each piece of information of the first sequence of information an indication of the level of human intelligibility of an output performed by the second device based on this piece of information and to indicate the output performed by the second device based on this piece of information,
**characterized in that** the communication unit (7) comprises a separate communication channel that uses transmission control protocol that preserves information integrity to receive the fourth sequence of information.

11. Device according to claim 10, wherein the evaluation unit is further configured to evaluate whether any detected aberrance between the second and fourth sequences of information is above or below a threshold of human perception.

12. Device according to claim one of claims 10 to 11, wherein the device comprises
- a screen,
- a communication detection unit configured to detect whether the device is communicating with at least one other device, in an audio and / or video call, and
- a control unit configured to, if the communication detection unit has detected that the device is communicating with at least one other device, control the device to display on the screen an indication of acoustic signals, through a vocal signal, captured by the device via the input unit, wherein the indication comprises sub titles, and / or an indication of acoustic signals output by the at least one other device, wherein the indication comprises sub titles, and / or at least one statistical indicator of communication quality, such as an indication of a background noise, a signal-to-noise-ratio, a connectivity strength, a transmission delay or a synchronization delay.

13. System comprising at least two devices configured to perform a method
according to one of claims 1 to 9, using at least one device according to one of claims 10 to 12.

14. System according to claim 13, comprising
a first device according to one of claims 10 to 11, and
a second device, comprising
- At least one input unit, such as a microphone (1);
- At least one output unit, such as a speaker (3);
- At least one conversion unit (5, 8), configured to convert input received from a user via the input unit into a fifth sequence of information,
- At least one extraction unit (6, 9), configured to generate a sixth sequence of information from the received input by extracting from the received input at least one piece of information corresponding to a past time instant, wherein the at least one piece of information is preferably time-stamped;
- At least one communication unit (7), configured to transmit the fifth and sixth sequences of information to the first device;
wherein the first device comprises a conversion unit (5, 8), configured to generate a seventh sequence of information based on the fifth sequence of information received from the second device, wherein the seventh sequence of information corresponds to an output to be output by the first device on the basis of the fifth sequence of information;
And the first device further comprises an extraction unit (6, 9), configured to generate a eighth sequence of information from the seventh sequence of information by extracting from the seventh sequence of information at least one piece of information corresponding to a past time instant, wherein the at least one piece of information is time-stamped; and
The at least one comparison unit (10) of the first device is configured to compare the sixth and eighth sequences of information to detect any aberrances there between, wherein each piece of information of the sixth sequence of information is compared to a corresponding piece of information of the eighth sequence of information;
**characterized in that** the separate communication channel for transmitting the fourth and / or sixth sequences of information uses a transmission control protocol (TCP) communication protocol.

15. System according to claim 13 or 14, wherein the first and / or the second device comprises a comparison unit (10) and / or an evaluation unit.

16. System according to one of claims 13 to 15, wherein the at least one communication unit (7) of the first device and the at least one communication unit (7) of are configured to provide a separate communication channel, that uses a communication protocol that preserves information integrity, to transmit the fourth sequence of information and / or the sixth sequence of information between the first and second devices.

17. Memory device containing machine-readable instructions that when executed by a device enable the device to perform a method according to one of claims 1 to 9.

## Patentansprüche

1. Verfahren zur Überwachung der Kommunikationsqualität zwischen zumindest zwei Vorrichtungen, wobei das Verfahren umfasst:
- Empfangen, mittels einer ersten Vorrichtung, einer Eingabe von einem Benutzer;
- Umwandeln der vom Benutzer empfangenen Eingabe in eine erste Informationssequenz;
- Übertragen der ersten Informationssequenz an eine zweite Vorrichtung;
- Erzeugen einer zweiten Informationssequenz auf der Grundlage der empfangenen Eingabe durch Extraktion aus der empfangenen Eingabe von zumindest einem Informationselement, das einem vergangenen Zeitpunkt entspricht, wobei das oder die Informationselemente vorzugsweise zeitgestempelt sind;
- Speichern der zweiten Informationssequenz in der ersten Vorrichtung;
- Erzeugen einer dritten Informationssequenz durch die zweite Vorrichtung, wobei die dritte Informationssequenz einer Ausgabe entspricht, die von der zweiten Vorrichtung auf der Grundlage der ersten Informationssequenz bereitzustellen ist;
- Erzeugen einer vierten Informationssequenz auf der Grundlage der dritten Informationssequenz durch Extraktion aus der dritten Informationssequenz von zumindest einem Informationselement, das einem vergangenen Zeitpunkt entspricht, wobei das oder die Informationselemente zeitgestempelt sind;
- Übertragen der vierten Informationssequenz an die erste Vorrichtung;
- Vergleichen der zweiten und vierten Informationssequenzen, um etwaige Abweichungen zwischen ihnen zu erkennen, wobei jedes Informationselement der zweiten Informationssequenz mit einem entsprechenden Informationselement der vierten Informationssequenz verglichen wird;
- Anzeigen, mittels einer Anzeige durch die erste Vorrichtung, für jedes Informationselement der ersten Informationssequenz, einer Angabe des Niveaus der menschlichen Verständlichkeit einer von der zweiten Vorrichtung auf der Grundlage des genannten Informationselements ausgeführten Ausgabe und vorzugsweise einer Angabe der von der zweiten Vorrichtung auf der Grundlage des genannten Informationselements ausgeführten Ausgabe,
**dadurch gekennzeichnet, dass**
ein separater Kommunikationskanal verwendet wird, der ein Übertragungssteuerungsprotokoll zur Wahrung der Informationsintegrität nutzt, um die vierte Informationssequenz zwischen der zweiten und der ersten Vorrichtung zu übertragen.

2. Verfahren nach Anspruch 1, ferner umfassend den Schritt: die Bewertung, ob eine erkannte Abweichung zwischen der zweiten und der vierten Informationssequenz über oder unterhalb einer menschlichen Wahrnehmungsschwelle liegt.

3. Verfahren nach Anspruch 1, wobei das oder die Informationselemente aus der empfangenen Eingabe extrahiert werden, sodass das oder die Informationselemente einer Entität entsprechen, wie etwa einem Wort, einer Zahl, einer Pause, einem Frame, einem Bild oder einem Ton, die in der Eingabe enthalten ist und für die menschliche Verständlichkeit der Eingabe relevant ist.

4. Verfahren nach einem der vorhergehenden Ansprüche, wobei die vom Benutzer empfangene Eingabe eine akustische Eingabe ist, die sich auf Sprache bezieht, und die Eingabe mittels Kompression und/oder Codierung in die erste Informationssequenz umgewandelt wird.

5. Verfahren nach einem der vorhergehenden Ansprüche, wobei die zweite und die vierte Informationssequenz durch einen Sprach-zu-Text-Wandler erzeugt werden und Text enthalten.

6. Verfahren nach einem der vorhergehenden Ansprüche, wobei die von der zweiten Vorrichtung auf der Grundlage der dritten Informationssequenz ausgeführte Ausgabe einem Benutzer der ersten Vorrichtung mittels der Anzeige von Untertiteln angezeigt wird, die akustischen, sich auf Sprache beziehenden Signalen entsprechen, welche von der zweiten Vorrichtung über eine Ausgabeeinheit, dargestellt durch einen Bildschirm, der ersten Vorrichtung ausgegeben werden.

7. Verfahren nach einem der vorhergehenden Ansprüche, wobei die Angabe des Niveaus der menschlichen Verständlichkeit einer von der zweiten Vorrichtung ausgeführten Ausgabe auf der Grundlage des genannten Informationselements der ersten Informationssequenz sich auf ein Symbol, eine Schriftart oder einen Farbcode beziehen kann.

8. Verfahren nach einem der vorhergehenden Ansprüche, wobei die Angabe des Niveaus der menschlichen Verständlichkeit einer von der zweiten Vorrichtung ausgeführten Ausgabe auf der Grundlage des genannten Informationselements der ersten Informationssequenz auf eine sensorische Modalität des Benutzers gerichtet ist, die sich von der vom Benutzer empfangenen Eingabe unterscheidet.

9. Verfahren nach einem der vorhergehenden Ansprüche, wobei jedem Informationselement der zweiten Informationssequenz eine Kennung hinzugefügt wird und eine entsprechende Kennung aus jedem Informationselement der vierten Informationssequenz extrahiert wird, und die Kennungen der Elemente der zweiten und vierten Informationssequenzen verglichen werden, um etwaige Abweichungen der ersten und zweiten Informationssequenzen zu erkennen.

10. Vorrichtung, vorzugsweise ausgelegt zur Durchführung eines Verfahrens nach einem der vorhergehenden Ansprüche, wobei die Vorrichtung umfasst:
- zumindest eine Eingabeeinheit, wie ein Mikrofon (1);
- zumindest eine Ausgabeeinheit, wie einen Lautsprecher (3);
- zumindest eine Umwandlungseinheit (5, 8), ausgelegt zur Umwandlung einer vom Benutzer über die Eingabeeinheit empfangenen Eingabe in eine erste Informationssequenz;
- zumindest eine Extraktionseinheit (6, 9), ausgelegt zur Erzeugung einer zweiten Informationssequenz aus der empfangenen Eingabe durch Extraktion von zumindest einem Informationselement, das einem vergangenen Zeitpunkt entspricht, wobei das oder die Informationselemente vorzugsweise zeitgestempelt sind;
- einen Speicher zum Speichern der zweiten Informationssequenz;
- zumindest eine Kommunikationseinheit (7), ausgelegt zur Übertragung der ersten Informationssequenz an eine zweite Vorrichtung und zum Empfang einer vierten Informationssequenz von der zweiten Vorrichtung, wobei die vierte Informationssequenz zumindest einem zeitgestempelten Informationselement entspricht, das aus einer dritten Informationssequenz extrahiert ist, welche einer von der zweiten Vorrichtung auf der Grundlage der ersten Informationssequenz bereitzustellenden Ausgabe entspricht;
- zumindest eine Vergleichseinheit (10), ausgelegt zum Vergleichen der zweiten und vierten Informationssequenzen zur Erkennung etwaiger Abweichungen zwischen ihnen, wobei jedes Informationselement der zweiten Informationssequenz mit einem entsprechenden Informationselement der vierten Informationssequenz verglichen wird;
- zumindest eine Auswerteeinheit, ausgelegt dazu, für jedes Informationselement der ersten Informationssequenz eine Angabe des Niveaus der menschlichen Verständlichkeit einer von der zweiten Vorrichtung auf der Grundlage des genannten Informationselements ausgeführten Ausgabe anzuzeigen sowie die von der zweiten Vorrichtung auf der Grundlage des genannten Informationselements ausgeführte Ausgabe anzuzeigen,
**dadurch gekennzeichnet, dass**
die Kommunikationseinheit (7) einen separaten Kommunikationskanal umfasst, der ein Übertragungssteuerungsprotokoll zur Wahrung der Informationsintegrität verwendet, um die vierte Informationssequenz zu empfangen.

11. Vorrichtung nach Anspruch 10, wobei die Auswerteeinheit ferner dazu ausgelegt ist zu bewerten, ob eine erkannte Abweichung zwischen der zweiten und der vierten Informationssequenz über oder unterhalb einer menschlichen Wahrnehmungsschwelle liegt.

12. Vorrichtung nach einem der Ansprüche 10 bis 11, wobei die Vorrichtung umfasst:
- einen Bildschirm,
- eine Kommunikationserkennungseinheit, ausgelegt zur Erkennung, ob die Vorrichtung mit zumindest einer weiteren Vorrichtung in einem Audio- und/oder Videoanruf kommuniziert, und
- eine Steuereinheit, ausgelegt dazu, wenn die Kommunikationserkennungseinheit erkannt hat, dass die Vorrichtung mit zumindest einer weiteren Vorrichtung kommuniziert, die Vorrichtung dazu zu veranlassen, auf dem Bildschirm eine Anzeige akustischer Signale darzustellen, die über ein Sprachsignal von der Vorrichtung über die Eingabeeinheit erfasst wurden, wobei die Anzeige Untertitel umfasst, und/oder eine Anzeige akustischer Signale, die von der oder den anderen Vorrichtungen ausgegeben werden, wobei die Anzeige Untertitel umfasst, und/oder zumindest einen statistischen Indikator der Kommunikationsqualität, wie etwa eine Anzeige eines Hintergrundrauschens, eines Signal-Rausch-Verhältnisses, einer Konnektivitätsstärke, einer Übertragungsverzögerung oder einer Synchronisationsverzögerung.

13. System umfassend zumindest zwei Vorrichtungen, ausgelegt zur Durchführung eines Verfahrens nach einem der Ansprüche 1 bis 9, unter Verwendung von zumindest einer Vorrichtung nach einem der Ansprüche 10 bis 12.

14. System nach Anspruch 13, umfassend:
- eine erste Vorrichtung nach einem der Ansprüche 10 bis 11 und
- eine zweite Vorrichtung, umfassend:
- zumindest eine Eingabeeinheit, wie ein Mikrofon (1);
- zumindest eine Ausgabeeinheit, wie einen Lautsprecher (3);
- zumindest eine Umwandlungseinheit (5, 8), ausgelegt zur Umwandlung einer vom Benutzer über die Eingabeeinheit empfangenen Eingabe in eine fünfte Informationssequenz;
- zumindest eine Extraktionseinheit (6, 9), ausgelegt zur Erzeugung einer sechsten Informationssequenz aus der empfangenen Eingabe durch Extraktion von zumindest einem Informationselement, das einem vergangenen Zeitpunkt entspricht, wobei das oder die Informationselemente vorzugsweise zeitgestempelt sind;
- zumindest eine Kommunikationseinheit (7), ausgelegt zur Übertragung der fünften und sechsten Informationssequenzen an die erste Vorrichtung;
- wobei
- die erste Vorrichtung eine Umwandlungseinheit (5, 8) umfasst, ausgelegt zur Erzeugung einer siebten Informationssequenz auf der Grundlage der von der zweiten Vorrichtung empfangenen fünften Informationssequenz, wobei die siebte Informationssequenz einer von der ersten Vorrichtung auf der Grundlage der fünften Informationssequenz bereitzustellenden Ausgabe entspricht;
- die erste Vorrichtung ferner eine Extraktionseinheit (6, 9) umfasst, ausgelegt zur Erzeugung einer achten Informationssequenz aus der siebten Informationssequenz durch Extraktion von zumindest einem Informationselement, das einem vergangenen Zeitpunkt entspricht, wobei das oder die Informationselemente zeitgestempelt sind; und
- die eine oder mehreren Vergleichseinheiten (10) der ersten Vorrichtung ausgelegt sind zum Vergleichen der sechsten und achten Informationssequenzen, um etwaige Abweichungen zwischen ihnen zu erkennen, wobei jedes Informationselement der sechsten Informationssequenz mit einem entsprechenden Informationselement der achten Informationssequenz verglichen wird;
**dadurch gekennzeichnet, dass**
der separate Kommunikationskanal zur Übertragung der vierten Informationssequenz und/oder der sechsten Informationssequenz ein Kommunikationsprotokoll vom Typ Übertragungssteuerungsprotokoll (TCP) verwendet.

15. System nach Anspruch 13 oder 14, wobei die erste Vorrichtung und/oder die zweite Vorrichtung eine Vergleichseinheit (10) und/oder eine Auswerteeinheit umfasst.

16. System nach einem der Ansprüche 13 bis 15, wobei die eine oder mehreren Kommunikationseinheiten (7) der ersten Vorrichtung und die eine oder mehreren Kommunikationseinheiten (7) der zweiten Vorrichtung ausgelegt sind, einen separaten Kommunikationskanal bereitzustellen, der ein Kommunikationsprotokoll zur Wahrung der Informationsintegrität verwendet, um die vierte Informationssequenz und/oder die sechste Informationssequenz zwischen der ersten und der zweiten Vorrichtung zu übertragen.

17. Speichervorrichtung, die maschinenlesbare Anweisungen enthält, welche bei Ausführung durch eine Vorrichtung die Vorrichtung dazu veranlassen, ein Verfahren nach einem der Ansprüche 1 bis 9 durchzuführen.

## Revendications

1. Procédé de surveillance de la qualité de communication entre au moins deux dispositifs, le procédé comprenant :
- la réception, au moyen d'un premier dispositif, d'une entrée à partir d'un utilisateur ;
- la conversion de l'entrée reçue à partir de l'utilisateur en une première séquence d'informations ;
- la transmission de la première séquence d'informations à un second dispositif ;
- la génération d'une deuxième séquence d'informations sur la base de l'entrée reçue au moyen de l'extraction, à partir de l'entrée reçue, d'au moins un élément d'information correspondant à un instant de temps passé, le ou les éléments d'information étant de préférence horodatés ;
- le stockage de la deuxième séquence d'informations dans le premier dispositif ;
- la génération d'une troisième séquence d'informations au moyen du second dispositif, la troisième séquence d'informations correspondant à une sortie à être délivrée par le second dispositif sur la base de la première séquence d'informations ;
- la génération d'une quatrième séquence d'informations sur la base de la troisième séquence d'informations au moyen de l'extraction, à partir de la troisième séquence d'informations, d'au moins un élément d'information correspondant à un instant de temps passé, le ou les éléments d'information étant horodatés ;
- la transmission de la quatrième séquence d'informations au premier dispositif ;
- la comparaison des deuxième et quatrième séquences d'informations afin de détecter des aberrances quelconques entre elles, chaque élément d'information de la deuxième séquence d'informations étant comparé à un élément d'information correspondant de la quatrième séquence d'informations ;
- l'indication, par l'intermédiaire d'un affichage, au moyen du premier dispositif pour chaque élément d'information de la première séquence d'informations, d'une indication du niveau d'intelligibilité humaine d'une sortie effectuée par le second dispositif sur la base dudit élément d'information et, de préférence, d'une indication de la sortie effectuée par le second dispositif sur la base dudit élément d'information,
**caractérisé en ce que**
un canal de communication séparé, utilisant un protocole de commande de transmission destiné à préserver l'intégrité des informations, est utilisé pour transmettre la quatrième séquence d'informations entre les second et premier dispositifs.

2. Le procédé de la revendication 1, comprenant en outre l'étape suivante :
l'évaluation pour savoir si une aberrance détectée quelconque entre les deuxième et quatrième séquences d'informations est au-dessus ou au-dessous d'un seuil de perception humaine.

3. Le procédé de la revendication 1, dans lequel le ou les éléments d'information sont extraits à partir de l'entrée reçue, de sorte que le ou les éléments d'information correspondent à une entité, telle qu'un mot, un nombre, une pause, un cadre, une image ou un son, comprise dans l'entrée et qui est pertinente pour l'intelligibilité humaine de l'entrée.

4. Le procédé selon l'une des revendications précédentes, dans lequel l'entrée reçue à partir de l'utilisateur est une entrée acoustique, laquelle est une entrée se rapportant à la parole, et l'entrée est convertie en la première séquence d'informations au moyen d'une compression et/ou d'un encodage.

5. Le procédé selon l'une des revendications précédentes, dans lequel les deuxième et quatrième séquences d'informations sont générées par un convertisseur parole-texte, et comprennent du texte.

6. Le procédé selon l'une des revendications précédentes, dans lequel la sortie effectuée par le second dispositif sur la base de la troisième séquence d'informations est indiquée à un utilisateur du premier dispositif au moyen de l'affichage de sous-titres correspondant à des signaux acoustiques se rapportant à la parole, délivrés par le second dispositif, sur une unité de sortie, représentée par un écran, du premier dispositif.

7. Le procédé selon l'une des revendications précédentes, dans lequel l'indication du niveau d'intelligibilité humaine d'une sortie effectuée par le second dispositif, sur la base dudit élément d'information de la première séquence d'informations, peut se rapporter à un symbole, à une police de caractères ou à un code de couleur.

8. Le procédé selon l'une des revendications précédentes, dans lequel l'indication du niveau d'intelligibilité humaine d'une sortie effectuée par le second dispositif, sur la base dudit élément d'information de la première séquence, est dirigée vers une modalité sensorielle de l'utilisateur différente de l'entrée reçue à partir de l'utilisateur.

9. Le procédé selon l'une des revendications précédentes, dans lequel un identifiant est ajouté à chaque élément d'information de la deuxième séquence d'informations, et un identifiant correspondant est extrait à partir de chaque élément d'information de la quatrième séquence d'informations, et les identifiants des éléments des deuxième et quatrième séquences d'informations sont comparés afin de détecter des aberrances quelconques des première et deuxième séquences d'informations.

10. Dispositif, conçu de préférence pour effectuer un procédé selon l'une des revendications précédentes, le dispositif comprenant :
- au moins une unité d'entrée, telle qu'un microphone (1) ;
- au moins une unité de sortie, telle qu'un haut-parleur (3) ;
- au moins une unité de conversion (5, 8), conçue pour convertir une entrée reçue à partir d'un utilisateur, par l'intermédiaire de l'unité d'entrée, en une première séquence d'informations ;
- au moins une unité d'extraction (6, 9), conçue pour générer une deuxième séquence d'informations à partir de l'entrée reçue au moyen de l'extraction, à partir de l'entrée reçue, d'au moins un élément d'information correspondant à un instant de temps passé, le ou les éléments d'information étant de préférence horodatés ;
- une mémoire servant à stocker la deuxième séquence d'informations ;
- au moins une unité de communication (7), conçue pour transmettre la première séquence d'informations à un second dispositif et pour recevoir, à partir du second dispositif, une quatrième séquence d'informations, la quatrième séquence d'informations correspondant à au moins un élément d'information correspondant à un instant de temps passé, le ou les éléments d'information étant horodatés, extraits à partir d'une troisième séquence d'informations correspondant à une sortie à être délivrée par le second dispositif sur la base de la première séquence d'informations ;
- au moins une unité de comparaison (10), conçue pour comparer les deuxième et quatrième séquences d'informations afin de détecter des aberrances quelconques entre elles, chaque élément d'information de la deuxième séquence d'informations étant comparé à un élément d'information correspondant de la quatrième séquence d'informations ;
- au moins une unité d'évaluation conçue pour indiquer, pour chaque élément d'information de la première séquence d'informations, une indication du niveau d'intelligibilité humaine d'une sortie effectuée par le second dispositif sur la base dudit élément d'information, et pour indiquer la sortie effectuée par le second dispositif sur la base dudit élément d'information,
**caractérisé en ce que**
l'unité de communication (7) comprend un canal de communication séparé utilisant un protocole de commande de transmission, destiné à préserver l'intégrité des informations, pour recevoir la quatrième séquence d'informations.

11. Le dispositif selon la revendication 10, dans lequel l'unité d'évaluation est conçue en outre pour évaluer si une aberrance détectée quelconque entre les deuxième et quatrième séquences d'informations est au-dessus ou au-dessous d'un seuil de perception humaine.

12. Dispositif selon l'une des revendications 10 à 11, dans lequel le dispositif comprend :
- un écran,
- une unité de détection de communication conçue pour détecter si le dispositif est en communication avec au moins un autre dispositif, dans un appel audio et/ou vidéo, et
- une unité de commande conçue, si l'unité de détection de communication a détecté que le dispositif est en communication avec au moins un autre dispositif, pour amener le dispositif à afficher sur l'écran une indication de signaux acoustiques, par l'intermédiaire d'un signal vocal, capturés par le dispositif par l'intermédiaire de l'unité d'entrée, l'indication comprenant des sous-titres, et/ou une indication de signaux acoustiques délivrés par le ou les autres dispositifs, l'indication comprenant des sous-titres, et/ou au moins un indicateur statistique de la qualité de communication, tel qu'une indication d'un bruit de fond, d'un rapport signal sur bruit, d'une force de connectivité, d'un retard de transmission ou d'un retard de synchronisation.

13. Système comprenant au moins deux dispositifs conçus pour effectuer un procédé selon l'une des revendications 1 à 9, à l'aide d'au moins un dispositif selon l'une des revendications 10 à 12.

14. Système selon la revendication 13, comprenant :
un premier dispositif selon l'une des revendications 10 à 11, et
un second dispositif comportant :
- au moins une unité d'entrée, telle qu'un microphone (1) ;
- au moins une unité de sortie, telle qu'un haut-parleur (3) ;
- au moins une unité de conversion (5, 8), conçue pour convertir une entrée reçue à partir d'un utilisateur, par l'intermédiaire de l'unité d'entrée, en une cinquième séquence d'informations ;
- au moins une unité d'extraction (6, 9), conçue pour générer une sixième séquence d'informations à partir de l'entrée reçue, au moyen de l'extraction, à partir de l'entrée reçue, d'au moins un élément d'information correspondant à un instant de temps passé, le ou les éléments d'information étant de préférence horodatés ;
- au moins une unité de communication (7), conçue pour transmettre les cinquième et sixième séquences d'informations au premier dispositif ;
dans lequel
le premier dispositif comprend une unité de conversion (5, 8), conçue pour générer une septième séquence d'informations sur la base de la cinquième séquence d'informations reçue à partir du second dispositif, la septième séquence d'informations correspondant à une sortie à être délivrée par le premier dispositif sur la base de la cinquième séquence d'informations ;
le premier dispositif comprend en outre une unité d'extraction (6, 9), conçue pour générer une huitième séquence d'informations à partir de la septième séquence d'informations au moyen de l'extraction, à partir de la septième séquence d'informations, d'au moins un élément d'information correspondant à un instant de temps passé, le ou les éléments d'information étant horodatés ; et
la ou les unités de comparaison (10) du premier dispositif sont conçues pour comparer les sixième et huitième séquences d'informations afin de détecter des aberrances quelconques entre elles, chaque élément d'information de la sixième séquence d'informations étant comparé à un élément d'information correspondant de la huitième séquence d'informations ;
**caractérisé en ce que** le canal de communication séparé, permettant de transmettre la quatrième séquence d'informations et/ou la sixième séquence d'informations, utilise un protocole de communication du type protocole de commande de transmission (TCP).

15. Le système selon les revendications 13 ou 14, dans lequel le premier dispositif et/ou le second dispositif comprennent une unité de comparaison (10) et/ou une unité d'évaluation.

16. Le système selon l'une des revendications 13 à 15, dans lequel la ou les unités de communication (7) du premier dispositif, et la ou les unités de communication (7) du second dispositif, sont conçues pour fournir un canal de communication séparé, lequel utilise un protocole de communication destiné à préserver l'intégrité des informations, pour transmettre la quatrième séquence d'informations et/ou la sixième séquence d'informations entre les premier et second dispositifs.

17. Dispositif de mémoire contenant des instructions lisibles par machine, lesquelles, lors de leur exécution par un dispositif, permettent au dispositif d'effectuer un procédé selon l'une des revendications 1 à 9.
